# EUROPEAN PATENT APPLICATION

(11) **EP 3 508 362 A1**
(43) Date of publication of application: **10.07.2019**
(21) Application number: 17846253.7
(22) Date of filing: 23.08.2017
(51) Int. Cl.: B60G 21/055

(54) **STABILIZER MANUFACTURING METHOD, AND JOINT STRUCTURE FOR STABILIZER LINK**

(30) Priority: 05.09.2016 JP 2016172572; 01.06.2017 JP 2017109235
(71) Applicant: NHK Spring Co., Ltd., Kanagawa 236-0004 (JP)
(72) Inventor: KURODA Shigeru, Yokohama-shi Kanagawa 236-0004 (JP); OHMURA Shuji, Yokohama-shi Kanagawa 236-0004 (JP)
(74) Representative: Dehns
(86) International application number: PCT/JP2017/030140
(87) International publication number: WO 2018/043248

(57) **Abstract**

A stabilizer link includes a support bar, and ball joints. The ball joint includes a ball stud including a ball portion and a stud portion, and a housing that turnably supports the ball portion of the ball stud. The stabilizer is formed of a rod-shaped member made of metal. Mounting portions to which the stabilizer links are to be joined are respectively provided at both ends of the stabilizer. Through-holes through which the stud portions of the ball studs are to be inserted are respectively provided in the mounting portions. The stabilizer link is joined to the stabilizer by press-fitting the stud portion of the ball stud into the through-hole of the mounting portion.

## Description

### TECHNICAL FIELD

The present invention relates to a stabilizer manufacturing method including joining a stabilizer link for coupling a suspension device to a stabilizer, which are provided in a vehicle, to a stabilizer, thereby manufacturing the stabilizer to which the stabilizer link is joined, and a joint structure for a stabilizer link.

### BACKGROUND ART

A vehicle is provided with a suspension device that absorbs and reduces impact and vibration transmitted from a road surface to a vehicle body via wheels, and a stabilizer for increasing a roll rigidity of the vehicle body. In order to couple the suspension device to the stabilizer, a rod-shaped member called a stabilizer link is used in the vehicle. For example, as shown in Patent Literature 1, a stabilizer link includes: a support bar; and ball joints that are provided at both ends of the support bar.

The stabilizer link according to Patent Literature 1 includes: a ball stud including a ball portion and a stud portion; and housings that are provided at both ends of the support bar, and each housing turnably houses the ball portion of the ball stud. A ball seat made of resin is provided inward of the housing so as to be interposed between an inner wall of the housing and the ball portion of the ball stud.

### CITATION LIST

### Patent Literature

Patent Literature 1: JP 2016-84057 A

### SUMMARY OF INVENTION

### Technical Problem

In order to join the stabilizer link according to Patent Literature 1 to the stabilizer, plate-shaped mounting portions that are formed by press working are respectively provided at both ends of the stabilizer. Through-holes are respectively opened in the mounting portions. The stud portion of the ball stud is caused to penetrate through the through-hole that is opened in the mounting portion of the stabilizer. A female screw of a nut is screwed onto a male screw provided on a penetration-side of the stud portion that protrudes from the through-hole. With such a screw joint, the stabilizer is joined to the stabilizer link.

However, the joining method that uses the screw of the stabilizer link according to Patent Literature 1 requires, as a measure against loosening of the female screw of the nut from the male screw of the stud portion, for example, precise management on the size of the mounting portion, the smoothness in the surrounding of the through-hole that is opened in the mounting portion, the film thickness of the coating material, and so on. As a result, the joining method for a stabilizer link according to Patent Literature 1 still has room for improvement in a cumbersome measure against the separation of the joint of the stabilizer link from the stabilizer.

The present invention is made in view of the abovementioned circumstances, and aims to provide a stabilizer manufacturing method capable of embodying a rigid joint of a stabilizer link with respect to a stabilizer that does not particularly require a measure against separation of the joint.

Moreover, the present invention aims to provide a joint structure for a stabilizer link capable of embodying a rigid joint of a stabilizer link with respect to a stabilizer that does not particularly require a measure against separation of the joint.

Furthermore, the present invention aims to provide a joint structure for a stabilizer link capable of excellently holding a comfortable ride of a vehicle by suppressing vibration and noise.

### Solution to Problem

To solve the problems, the stabilizer manufacturing method according to the present invention (1) is a stabilizer manufacturing method in which a stabilizer link for coupling a suspension device and a stabilizer, which are provided in a vehicle, is joined to the stabilizer, thereby manufacturing the stabilizer to which the stabilizer link is joined. The stabilizer link includes: a support bar; and ball joints that are provided at both ends of the support bar. Each of the ball joints includes: a ball stud including a ball portion and a stud portion; and a housing that turnably supports the ball portion of the ball stud. The stabilizer is formed of a rod-shaped member made of metal. Mounting portions to which the stabilizer links are to be joined are respectively provided at both ends of the stabilizer. Through-holes through which the stud portions of the ball studs are to be inserted are respectively provided in the mounting portions. The stabilizer link is joined to the stabilizer by press-fitting the stud portion of the ball stud into the through-hole of the mounting portion.

With the stabilizer manufacturing method according to the present invention (1), the stud portion of the ball stud is press-fitted into the through-hole of the mounting portion, thereby joining the stabilizer link to the stabilizer, so that it is possible to easily embody a rigid joint of the stabilizer link with respect to the stabilizer that does not particularly require a measure against separation of the joint.

Meanwhile, the joint structure for a stabilizer link according to the present invention (12) is a joint structure for a stabilizer link for joining a stabilizer link for coupling a suspension device to a stabilizer, which are provided in a vehicle, to the stabilizer. The stabilizer link includes: a support bar; and ball joints that are provided at both ends of the support bar. Each of the ball joints includes: a ball stud including a ball portion and a stud portion; and a housing that turnably supports the ball portion of the ball stud. The stabilizer is formed of a rod-shaped member made of metal. Mounting portions to which the stabilizer links are to be joined are respectively provided at both ends of the stabilizer. Through-holes through which the stud portions of the ball studs are to be inserted are respectively provided in the mounting portions. The stud portion of the ball stud is press-fitted into the through-hole of the mounting portion accordingly to be joined to the mounting portion.

With the joint structure for a stabilizer link according to the present invention (12), the stud portion of the ball stud is press-fitted into the through-hole of the mounting portion accordingly to be joined to the mounting portion, so that it is possible to easily embody a rigid joint of the stabilizer link with respect to the stabilizer that does not particularly require a measure against separation of the joint.

Meanwhile, the joint structure for a stabilizer link according to the present invention (16) is a joint structure for a stabilizer link for joining a stabilizer link for coupling a suspension device to a stabilizer, which are provided in a vehicle, to the stabilizer. The stabilizer link includes: a support bar; and ball joints that are provided at both ends of the support bar. Each of the ball joints includes: a ball stud including a ball portion and a stud portion; and a housing that turnably supports the ball portion of the ball stud. The stabilizer is formed of a rod-shaped member made of metal. Mounting portions to which the stabilizer links are to be joined are respectively provided at both ends of the stabilizer. Through-holes through which the stud portions of the ball studs are to be inserted are respectively provided in the mounting portions. The stud portion of the ball stud is joined to the mounting portion with an elastic member being interposed between the through-hole of the mounting portion and the stud portion of the ball stud.

With the joint structure for a stabilizer link according to the present invention (16), the stud portion of the ball stud is joined to the mounting portion with the elastic member being interposed between the through-hole of the mounting portion and the stud portion of the ball stud, so that it is possible to excellently hold a comfortable ride of the vehicle by suppressing vibration and noise.

### Advantageous Effects of Invention

The present invention can provide a stabilizer manufacturing method, and a joint structure for a stabilizer link that are capable of embodying a rigid joint of the stabilizer link with respect to the stabilizer that does not particularly require a measure against separation of the joint.

### BRIEF DESCRIPTION OF DRAWINGS

FIG. 1 is a perspective view showing a mounted state of a stabilizer link to a vehicle;
FIG. 2A is a perspective view showing a stabilizer manufacturing method, and a joint structure for a stabilizer link according to a first embodiment of the present invention;
FIG. 2B is a perspective view showing the stabilizer manufacturing method, and the joint structure for a stabilizer link according to the first embodiment of the present invention;
FIG. 3A is a main part cross-sectional view showing the stabilizer manufacturing method, and the joint structure for a stabilizer link according to the first embodiment of the present invention;
FIG. 3B is a main part cross-sectional view showing a stabilizer manufacturing method, and a joint structure for a stabilizer link according to a second embodiment of the present invention;
FIG. 4A is a front view showing a stabilizer manufacturing method, and a joint structure for a stabilizer link according to a first example in the second embodiment of the present invention, viewed from a direction of an arrow IIIB shown in FIG. 3B;
FIG. 4B is a front view showing a stabilizer manufacturing method, and a joint structure for a stabilizer link according to a second example in the second embodiment of the present invention, viewed from the direction of the arrow IIIB shown in FIG. 3B;
FIG. 4C is a front view showing a stabilizer manufacturing method, and a joint structure for a stabilizer link according to a third example in the second embodiment of the present invention, viewed from the direction of the arrow IIIB shown in FIG. 3B;
FIG. 5A is a main part cross-sectional view showing a stabilizer manufacturing method, and a joint structure for a stabilizer link according to a third embodiment of the present invention;
FIG. 5B is a front view showing a stabilizer manufacturing method, and a joint structure for a stabilizer link according to a first example in the third embodiment of the present invention, viewed from a direction of an arrow VA shown in FIG. 5A;
FIG. 5C is a front view showing a stabilizer manufacturing method, and a joint structure for a stabilizer link according to a second example in the third embodiment of the present invention, viewed from the direction of the arrow VA shown in FIG. 5A;
FIG. 5D is a front view showing a stabilizer manufacturing method, and a joint structure for a stabilizer link according to a third example in the third embodiment of the present invention, viewed from the direction of the arrow VA shown in FIG. 5A;
FIG. 6 is a main part cross-sectional view showing a stabilizer manufacturing method according to a fourth embodiment of the present invention;
FIG. 7A is an explanation view showing a stud portion of a ball stud that is used in the stabilizer manufacturing method, and a joint structure for a stabilizer link according to the fourth embodiment of the present invention;
FIG. 7B is an explanation view showing the stud portion of the ball stud that is used in the stabilizer manufacturing method, and the joint structure for a stabilizer link according to the fourth embodiment of the present invention;
FIG. 8A is a perspective view showing a stabilizer manufacturing method, and a joint structure for a stabilizer link according to a first example in a fifth embodiment of the present invention;
FIG. 8B is a perspective view showing a stabilizer manufacturing method, and a joint structure for a stabilizer link according to a second example in the fifth embodiment of the present invention;
FIG. 8C is a perspective view showing a stabilizer manufacturing method, and a joint structure for a stabilizer link according to a third example in the fifth embodiment of the present invention;
FIG. 9A is a perspective view showing a stabilizer manufacturing method, and a joint structure for a stabilizer link according to a first example in a sixth embodiment of the present invention;
FIG. 9B is a perspective view showing a stabilizer manufacturing method, and a joint structure for a stabilizer link according to a second example in the sixth embodiment of the present invention;
FIG. 9C is a perspective view showing a stabilizer manufacturing method, and a joint structure for a stabilizer link according to a third example in the sixth embodiment of the present invention;
FIG. 10 is a main part cross-sectional view showing a joint structure for a stabilizer link according to a seventh embodiment of the present invention; and
FIG. 11 is a front view showing the joint structure for a stabilizer link according to the seventh embodiment of the present invention, viewed from a direction of an arrow X shown in FIG. 10.

### DESCRIPTION OF EMBODIMENTS

Hereinafter, stabilizer manufacturing methods, and joint structures for a stabilizer link according to a plurality of embodiments of the present invention will be described in detail with reference to the drawings as appropriate. It should be noted that, in the drawings shown below, a common reference numeral is assigned to members having a common function or members having mutually corresponded functions in principle. Moreover, for convenience of explanation, the size and the shape of a member may be schematically shown in a deformed or exaggerated manner in some cases.

### <Stabilizer Link 11 and Configuration in Surrounding Thereof>

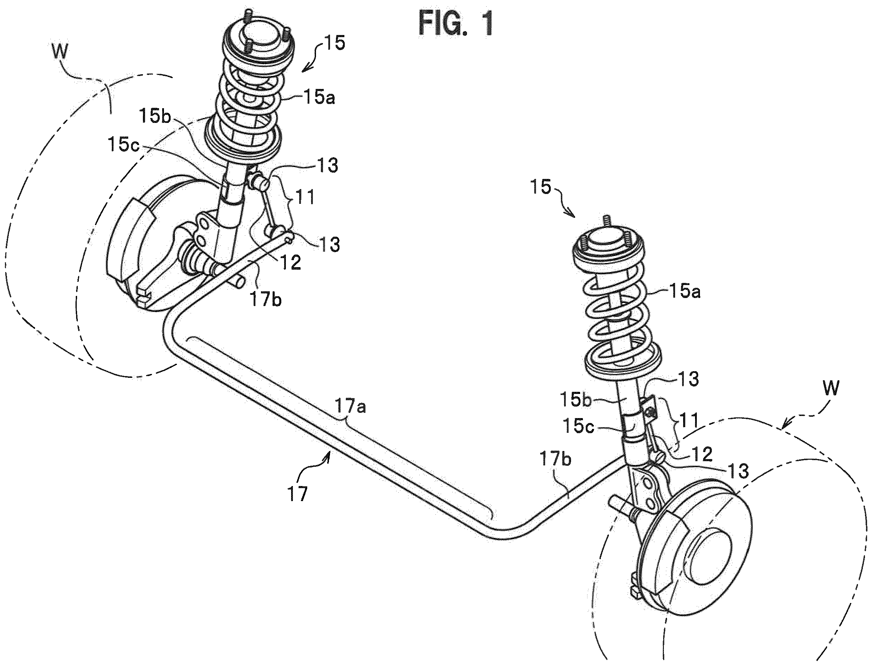

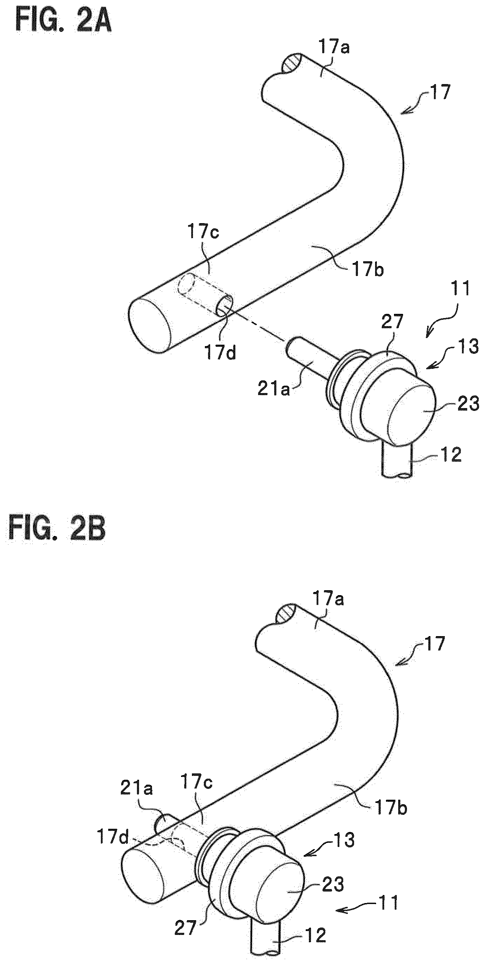

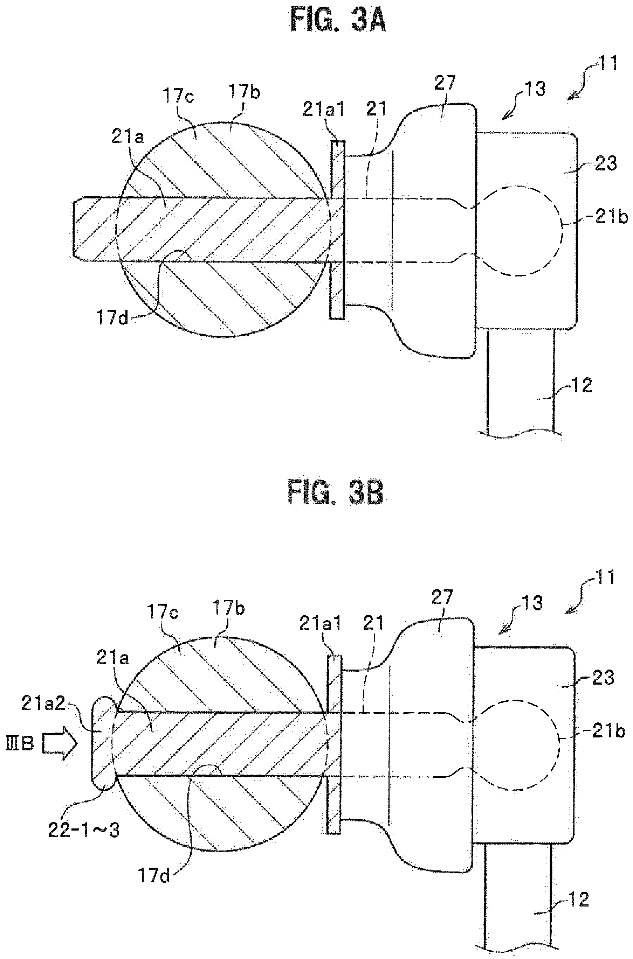

Firstly, a stabilizer link 11 and a configuration in the surrounding thereof will be described using an example in which the stabilizer link 11 is mounted to a vehicle (which is not shown) . FIG. 1 is a perspective view showing a mounted state of the stabilizer link 11 to a vehicle. FIG. 2A and FIG. 2B are perspective views showing the stabilizer manufacturing method, and the joint structure for a stabilizer link according to the first embodiment of the present invention. FIG. 3A is a main part cross-sectional view showing the stabilizer manufacturing method, and the joint structure for a stabilizer link according to the first embodiment of the present invention.

Wheels W are attached to a vehicle body (which is not shown) of the vehicle via suspension devices 15 as shown in FIG. 1. In order to absorb and reduce impact and vibration that are transmitted to the vehicle body from the road surface via the wheels W, each suspension device 15 includes a coil spring 15a and a shock absorber 15b.

The left and right suspension devices 15 are coupled with a stabilizer 17 made of a substantially angular U-shaped spring steel bar or the like therebetween, as shown in FIG. 1. In order to enhance the roll rigidity (resistance to torsion deformation) of the vehicle body to suppress rolling of the vehicle, the stabilizer 17 includes a torsion bar portion 17a that extends between the left and right wheels W, and a pair of arm portions 17b that extend from both ends of the torsion bar portion 17a while being bent from both ends, respectively.

The stabilizer 17 and the shock absorber 15b that supports the wheel W are coupled via the stabilizer link 11. The coupling is the same on sides of the left and right wheels W. The stabilizer link 11 is configured, as shown in FIG. 1, for example, by providing the ball joints 13 respectively to both ends of a substantially linear support bar 12 made of metal such as steel.

The ball joint 13 is configured from a ball stud 21 made of metal such as steel, and a housing 23 made of resin, for example, as shown in FIG. 3A. The ball stud 21 is configured by including a columnar stud portion 21a at one end portion, and a spherical ball portion 21b at the other end portion. The stud portion 21a and the ball portion 21b are joined to each other by welding. The stud portion 21a and the ball portion 21b may be integrally formed. The housings 23 are provided at both ends of the support bar 12, and each of which is configured so as to turnably support the ball portion 21b of the ball stud 21. As for resin raw material for the housing 23, for example, fiber-reinforced plastics (FRP) and carbon fiber-reinforced plastics (CFRP) are preferably used. The housing 23 is not limited to the housing 23 made of resin, but may be the housing 23 made of metal. It should be noted that the pair of the ball joints 13 have the same configuration.

The stud portion 21a of the ball stud 21 is configured by including a flange portion 21a1, as shown in FIG. 3A. The flange portion 21a1, which will be described later in detail, has a function of creating a locking force with respect to a mounting portion 17c that acts in an axial direction of the stud portion 21a, in cooperation with staked portions 22-1 to 3 (see first to third examples in a later-described second embodiment) of the stud portion 21a or welded portions 24-1 to 3 (first to third examples in a later-described third embodiment). The shape of the flange portion 21a1 is not particularly limited. Further, as the shape of the flange portion 21a1, a curved shape that allows the afore-mentioned function to be exhibited at a high level and is along an outer peripheral wall of the mounting portion 17c may be employed. Between the flange portion 21a1 of the stud portion 21a and one end of the housing 23, a circumferential dust cover 27 made of an elastic body such as rubber is attached so as to cover a clearance therebetween. The dust cover 27 also performs a function of preventing rainwater, dust, and the like from intruding into the ball joint 13.

One ball joint 13 of the pair of the ball joints 13 is fastened and fixed to a bracket 15c of the shock absorber 15b by a screw joint, as shown in FIG. 1. Moreover, the other ball joint 13 is joined to the mounting portion 17c included in the arm portion 17b in the stabilizer 17 using a stabilizer manufacturing method, and a joint structure for a stabilizer link according to an embodiment of the present invention, for example, as shown in FIG. 1, FIG. 2A, FIG. 2B, and FIG. 3A. This will be described next in detail.

### <Stabilizer Manufacturing Method, and Joint Structure for Stabilizer Link According to First Embodiment>

A stabilizer manufacturing method, and a joint structure for a stabilizer link according to a first embodiment will be described with reference to FIG. 2A, FIG. 2B, and FIG. 3A.

A penetration-hole (which corresponds to the "through-hole" in the present invention) 17d having a shape into which a column is exactly fitted is opened in the mounting portion 17c included in the arm portion 17b in the stabilizer 17, as shown in FIG. 2A, FIG. 2B, and FIG. 3A. The penetration-hole 17d is formed so as to be oriented to a direction orthogonal to a longitudinal direction of the arm portion 17b. The stud portion 21a of the ball stud 21 is inserted through the penetration-hole 17d. An outer diameter dimension of the stud portion 21a is formed substantially the same as or slightly smaller than an inner diameter dimension of the penetration-hole 17d.

In the stabilizer manufacturing method, and the joint structure for a stabilizer link according to the first embodiment, the stud portion 21a of the ball stud 21 is press-fitted into the penetration-hole 17d of the mounting portion 17c, thereby joining the stabilizer link 11 to the stabilizer 17.

With the stabilizer manufacturing method, and the joint structure for a stabilizer link by the press-fitting of the stabilizer link 11 according to the first embodiment, it is possible to embody a rigid joint of the stabilizer link 11 with respect to the stabilizer 17 that does not particularly require a measure against separation of the joint by a frictional force generated between an outer wall surface of the stud portion 21a and an inner wall surface of the penetration-hole 17d.

### <Stabilizer Manufacturing Method, and Joint Structure for Stabilizer Link According to Second Embodiment>

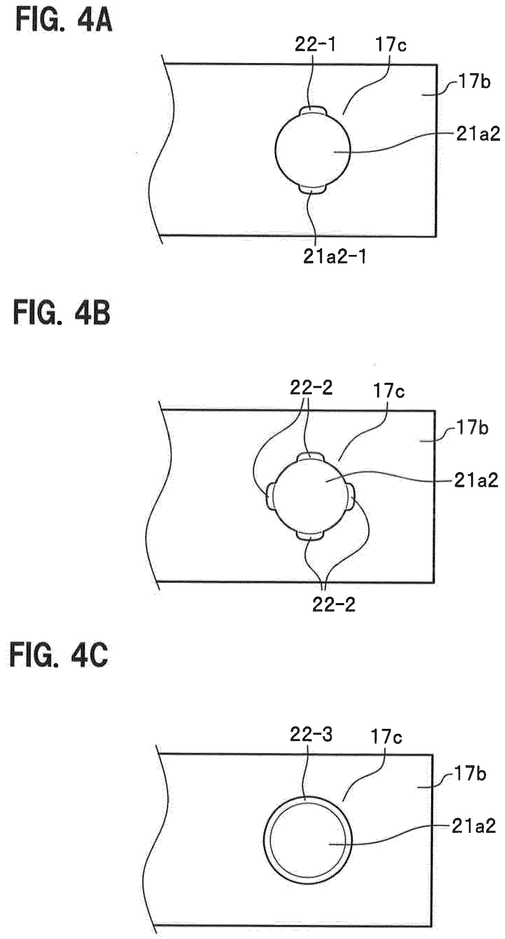

A stabilizer manufacturing method, and a joint structure for a stabilizer link according to a second embodiment will be described with reference to FIG. 3B and FIG. 4A to FIG. 4C. FIG. 3B is a main part cross-sectional view showing the stabilizer manufacturing method, and the joint structure for a stabilizer link according to the second embodiment of the present invention. FIG. 4A to FIG. 4C are front views respectively showing stabilizer manufacturing methods, and joint structures for a stabilizer link according to first to third examples in the second embodiment of the present invention, viewed from a direction of an arrow IIIB shown in FIG. 3B.

In the stabilizer manufacturing method, and the joint structure for a stabilizer link according to the second embodiment, in a state where the stud portion 21a of the ball stud 21 is caused to penetrate through the penetration-hole 17d of the mounting portion 17c, a penetration-side end portion 21a2 (see FIG. 3B) of the stud portion 21a is staked, thereby joining the stabilizer link 11 to the stabilizer 17.

In the stabilizer manufacturing method, and the joint structure for a stabilizer link according to the first example of the second embodiment, as shown in FIG. 4A, in the penetration-side end portion 21a2 having a circular shape viewed from the front surface of the stud portion 21a, point-symmetric two points are staked, thereby forming staked portions 22-1. The staked portions 22-1 cooperate with the flange portion 21a1 of the stud portion 21a, as shown in FIG. 3B to act so as to lock the columnar mounting portion 17c included in the arm portion 17b in the stabilizer 17 in the axial direction of the stud portion 21a.

In the stabilizer manufacturing method, and the joint structure for a stabilizer link according to the second example of the second embodiment, as shown in FIG. 4B, in the penetration-side end portion 21a2 having a circular shape viewed from the front surface of the stud portion 21a, point-symmetric four points are staked, thereby forming staked portions 22-2. The staked portions 22-2 cooperate with the flange portion 21a1 of the stud portion 21a, similar to the staked portions 22-1, as shown in FIG. 3B, to act so as to lock the columnar mounting portion 17c included in the arm portion 17b in the stabilizer 17 in the axial direction of the stud portion 21a.

In the stabilizer manufacturing method, and the joint structure for a stabilizer link according to the third example of the second embodiment, as shown in FIG. 4C, in the penetration-side end portion 21a2 having a circular shape viewed from the front surface of the stud portion 21a, an end edge is staked over the entire circumference, thereby forming a staked portion 22-3. The staked portion 22-3 cooperates with the flange portion 21a1 of the stud portion 21a, similar to the staked portions 22-1 and 2, as shown in FIG. 3B, to act so as to lock the columnar mounting portion 17c included in the arm portion 17b in the stabilizer 17 in the axial direction of the stud portion 21a.

In short, in the stabilizer manufacturing methods, and the joint structure for a stabilizer link by the staking of the stabilizer link 11 according to the first to third examples of the second embodiment, in the penetration-side end portion 21a2 of the stud portion 21a is subjected to staking processing, and the penetration-side end portion 21a2 is plastically deformed, thereby respectively forming the staked portions 22-1 to 3.

With the stabilizer manufacturing methods, and the joint structures for a stabilizer link by the staking of the stabilizer link 11 according to the first to third examples of the second embodiment, it is possible to embody a rigid joint of the stabilizer link 11 with respect to the stabilizer 17 that does not particularly require a measure against separation of the joint by the locking force with respect to the mounting portion 17c that acts in the axial direction of the stud portion 21a with the cooperation of the staked portions 22-1 to 3 of the stud portion 21a and the flange portion 21a1.

### <Stabilizer Manufacturing Method, and Joint Structure for Stabilizer Link According to Third Embodiment>

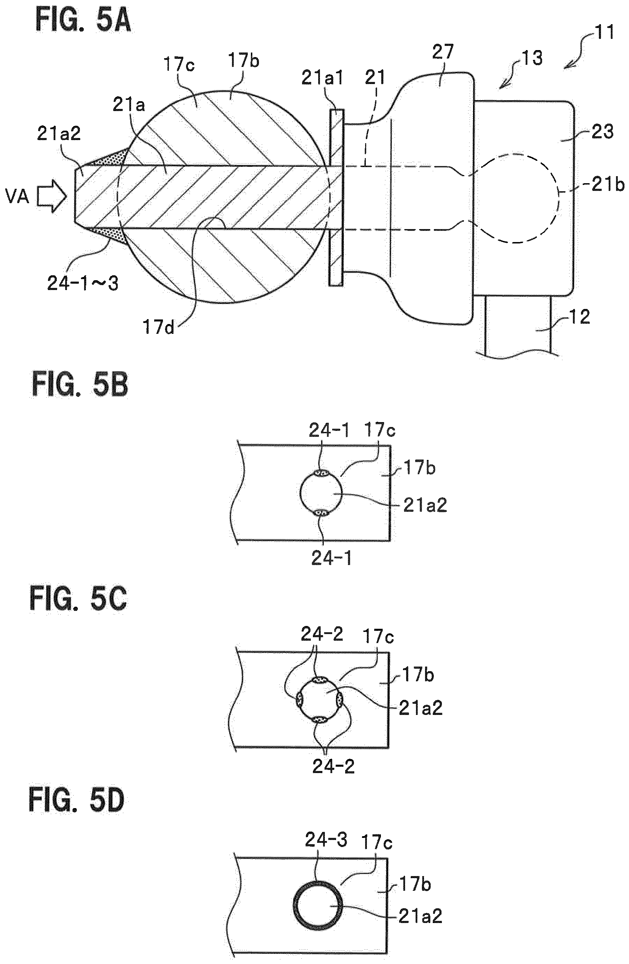

A stabilizer manufacturing method, and a joint structure for a stabilizer link according to a third embodiment will be described with reference to FIG. 5A to FIG. 5D. FIG. 5A is a main part cross-sectional view showing the stabilizer manufacturing method, and the joint structure for a stabilizer link according to the third embodiment of the present invention. FIG. 5B to FIG. 5D are front views respectively showing stabilizer manufacturing methods, and joint structures for a stabilizer link according to first to third examples in the third embodiment of the present invention, viewed from a direction of an arrow VA shown in FIG. 5A

In the stabilizer manufacturing method, and the joint structure for a stabilizer link according to the third embodiment, in a state where the stud portion 21a of the ball stud 21 is caused to penetrate through the penetration-hole 17d of the mounting portion 17c, the penetration-side end portion 21a2 (see FIG. 5A) of the stud portion 21a is welded to the mounting portion 17c, thereby joining the stabilizer link 11 to the stabilizer 17.

In the stabilizer manufacturing method, and the joint structure for a stabilizer link according to the first example in the third embodiment, as shown in FIG. 5B, in the penetration-side end portion 21a2 having a circular shape viewed from the front surface of the stud portion 21a, point-symmetric two points are welded to the mounting portion 17c, thereby forming welded portions 24-1. The welded portions 24-1 cooperate with the flange portion 21a1 of the stud portion 21a, as shown in FIG. 5A, to act so as to lock the columnar mounting portion 17c included in the arm portion 17b in the stabilizer 17 in the axial direction of the stud portion 21a.

In the stabilizer manufacturing method, and the joint structure for a stabilizer link according to the second example in the third embodiment, as shown in FIG. 5C, in the penetration-side end portion 21a2 having a circular shape viewed from the front surface of the stud portion 21a, point-symmetric four points are welded to the mounting portion 17c, thereby forming welded portions 24-2. The welded portions 24-2 cooperate with the flange portion 21a1 of the stud portion 21a, as shown in FIG. 5A, similar to the welded portions 24-1, to act so as to lock the columnar mounting portion 17c included in the arm portion 17b in the stabilizer 17 in the axial direction of the stud portion 21a.

In the stabilizer manufacturing method, and the joint structure for a stabilizer link according to the third example in the third embodiment, as shown in FIG. 5D, in the penetration-side end portion 21a2 having a circular shape viewed from the front surface of the stud portion 21a, an end edge is welded over the entire circumference, thereby forming a welded portion 24-3. The welded portion 24-3 cooperates with the flange portion 21a1 of the stud portion 21a, as shown in FIG. 5A, to act so as to lock the columnar mounting portion 17c included in the arm portion 17b in the stabilizer 17 in the axial direction of the stud portion 21a.

In short, in the stabilizer manufacturing methods, and the joint structure for a stabilizer link by the welding of the stabilizer link 11 according to the first to third examples in the third embodiment, the penetration-side end portion 21a2 of the stud portion 21a is welded to the mounting portion 17c, thereby respectively forming the welded portions 24-1 to 3.

With the stabilizer manufacturing methods, and the joint structure for a stabilizer link by the welding of the stabilizer link 11 according to the first to third examples in the third embodiment, it is possible to embody a rigid joint of the stabilizer link 11 with respect to the stabilizer 17 that does not particularly require a measure against separation of the joint by the locking force with respect to the mounting portion 17c that acts in the axial direction of the stud portion 21a with the cooperation of the welded portions 24-1 to 3 and the flange portion 21a1 of the stud portion 21a.

### <Stabilizer Manufacturing Method, and Joint Structure for Stabilizer Link According to Fourth Embodiment>

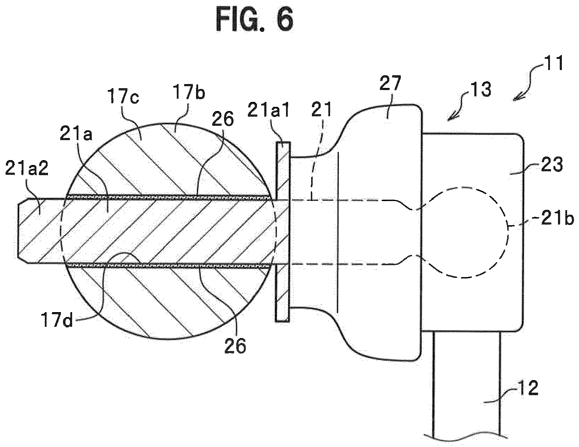

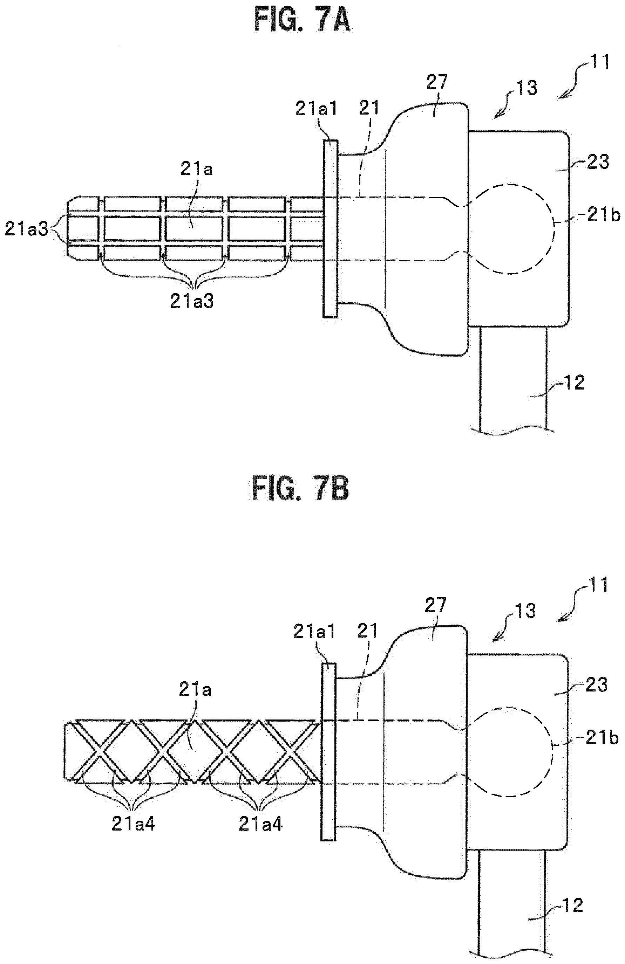

A stabilizer manufacturing method, and a joint structure for a stabilizer link according to a fourth embodiment will be described with reference to FIG. 6, FIG. 7A, and FIG. 7B. FIG. 6 is a main part cross-sectional view showing the stabilizer manufacturing method, and the joint structure for a stabilizer link according to the fourth embodiment of the present invention. FIG. 7A and FIG. 7B are explanation views showing the stud portion 21a of the ball stud 21 that is used in the stabilizer manufacturing method, and the joint structure for a stabilizer link according to the fourth embodiment of the present invention.

In the stabilizer manufacturing method, and the joint structure for a stabilizer link according to the fourth embodiment, as shown in FIG. 6, in a state where the stud portion 21a of the ball stud 21 is caused to penetrate through the penetration-hole 17d of the mounting portion 17c, an outer peripheral wall of the stud portion 21a is bonded to an inner peripheral wall of the penetration-hole 17d using an adhesive 26, thereby joining the stabilizer link 11 to the stabilizer 17.

In the stabilizer manufacturing method, and the joint structure for a stabilizer link according to the fourth embodiment, as shown in FIG. 7A and FIG. 7B, receiving grooves 21a3 and 21a4 for the adhesive 26 are respectively ditched in the outer peripheral wall of the stud portion 21a (which corresponds to "the applied surface for the adhesive" in the present invention"). The receiving grooves 21a3 and 21a4 for the adhesive 26 receive the surplus adhesive 26, and supply the adhesive 26 to a lacked part, thereby performing the function of making the amount of the adhesive 26 uniform in the applied surface. In the example shown in FIG. 7A, the receiving grooves 21a3 for the adhesive 26 are formed so as to extend in a direction along the axial direction of the stud portion 21a, and in an axial circumferential direction of the stud portion 21a. Moreover, in the example shown in FIG. 7B, the receiving grooves 21a4 for the adhesive 26 are formed so as to extend respectively in a clockwise direction and in a counter-clockwise direction, in a spiral direction of the stud portion 21a.

With the stabilizer manufacturing method, and the joint structure for a stabilizer link according to the fourth embodiment, the outer peripheral wall of the stud portion 21a is bonded to the inner peripheral wall of the penetration-hole 17d using the adhesive 26, thereby joining the stabilizer link 11 to the stabilizer 17, so that it is possible to easily embody a rigid joint of the stabilizer link 11 with respect to the stabilizer 17 that does not particularly require a measure against separation of the joint.

### <Stabilizer Manufacturing Method, and Joint Structures for Stabilizer Link According to First to Third Examples in Fifth Embodiment>

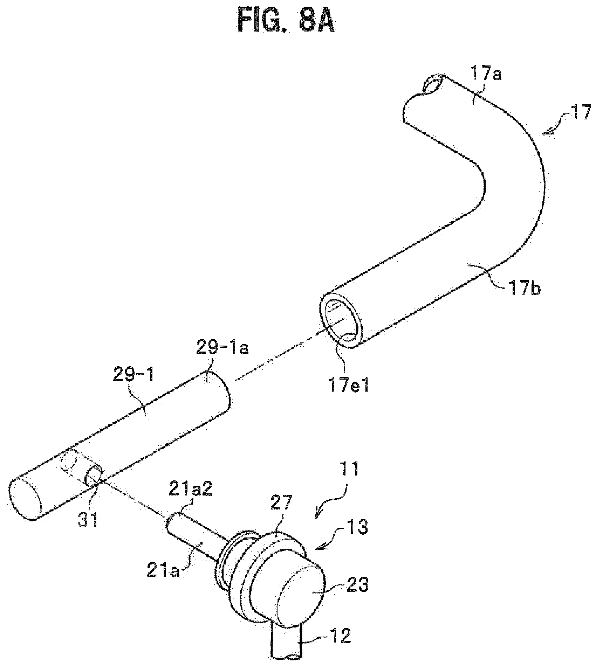

Stabilizer manufacturing methods, and joint structures for a stabilizer link according to first to third examples in a fifth embodiment will be described with reference to FIG. 8A to FIG. 8C. FIG. 8A to FIG. 8C are perspective views respectively showing the stabilizer manufacturing methods, and the joint structures for a stabilizer link according to the first to third examples in the fifth embodiment.

The stabilizer manufacturing methods, and the joint structures for a stabilizer link according to the first to fourth embodiments are used when the stabilizer link 11 is joined with respect to the solid stabilizer 17.

In contrast, the stabilizer manufacturing methods, and the joint structures for a stabilizer link according to the first to third examples in the fifth embodiment are different from the stabilizer manufacturing methods, and the joint structures for a stabilizer link according to the first to fourth embodiments in that as shown in FIG. 8A to FIG. 8C, the stabilizer link 11 is joined with respect to the hollow and tubular stabilizer 17.

In view of the difference, in the stabilizer manufacturing methods, and the joint structures for a stabilizer link according to the first to third examples in the fifth embodiment, as shown in FIG. 8A to FIG. 8C, substantially columnar mounting portions 29-1 to 3 are separately provided with respect to the arm portion 17b in the stabilizer 17, respectively. Meanwhile, in the stabilizer manufacturing methods, and the joint structures for a stabilizer link according to the first to fourth embodiments, for example, as shown in FIG. 2A and FIG. 2B, the substantially columnar mounting portion 17c in the stabilizer 17 is provided integrally with the arm portion 17b. A raw material for the mounting portions 29-1 to 3 is not particularly limited, and for example, metal such as iron or resin (including carbon fiber-reinforced plastics) may be employed as appropriate.

The mounting portion 29-1 according to the first example in the fifth embodiment is formed to have a substantially columnar appearance shape, as shown in FIG. 8A. A penetration-hole (which corresponds to the "through-hole" in the present invention) 31 having a shape into which a column is exactly fitted is opened in the mounting portion 29-1 according to the first example, as shown in FIG. 8A.
The penetration-hole 31 is formed so as to be oriented to a direction orthogonal to a longitudinal direction of the mounting portion 29-1. The stud portion 21a of the ball stud 21 is inserted through the penetration-hole 31. The outer diameter dimension of the stud portion 21a is formed substantially the same as or slightly smaller than the inner diameter dimension of the penetration-hole 31.

An outer diameter dimension of the mounting portion 29-1 according to the first example is formed substantially the same as or slightly smaller than an inner diameter dimension of the arm portion 17b in the stabilizer 17, as shown in FIG. 8A. The mounting portion 29-1 according to the first example is joined to the arm portion 17b in the stabilizer 17 in such a manner that an outer peripheral wall portion 29-1a of the mounting portion 29-1 is press-fitted into an inner peripheral wall portion 17e1 of the arm portion 17b.

Further, in the press-fitting, the inner peripheral wall portion 17e1 of the arm portion 17b and the outer peripheral wall portion 29-1a of the mounting portion 29-1 may be bonded and joined with an adhesive therebetween. Moreover, such a configuration may be employed that in a state where the mounting portion 29-1 is inserted into a hollow space of the arm portion 17b, the arm portion 17b is staked so as to compress the mounting portion 29-1. In addition, in a state where the mounting portion 29-1 is inserted into the hollow space of the arm portion 17b, a portion to which the arm portion 17b and the mounting portion 29-1 are adjacent may be welded and joined.

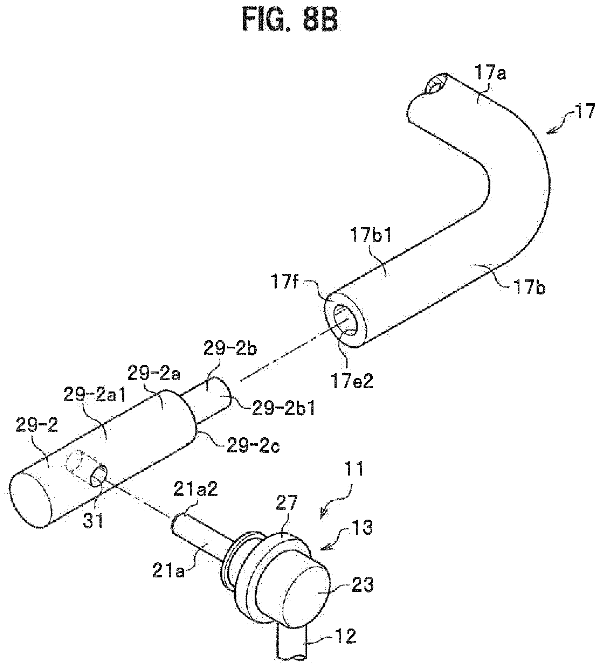

Moreover, the mounting portion 29-2 according to the second example in the fifth embodiment is formed to have a substantially columnar appearance shape, as shown in FIG. 8B, similar to the mounting portion 29-1 according to the first example. Further, the mounting portion 29-2 according to the second example has a substantially columnar large diameter portion 29-2a and a substantially columnar small diameter portion 29-2b, which are coaxially continuous to each other, as shown in FIG. 8B. The penetration-hole 31, similar to the mounting portion 29-1 according to the first example, is opened in the large diameter portion 29-2a in the mounting portion 29-2 according to the second example, as shown in FIG. 8B.

An outer diameter dimension of the small diameter portion 29-2b in the mounting portion 29-2 according to the second example is formed substantially the same as or slightly smaller than the inner diameter dimension of the arm portion 17b in the stabilizer 17, as shown in FIG. 8B. The mounting portion 29-2 according to the second example is joined to the arm portion 17b in the stabilizer 17 in such a manner that an outer peripheral wall portion 29-2b1 of the small diameter portion 29-2b in the mounting portion 29-2 is press-fitted into an inner peripheral wall portion 17e2 of the arm portion 17b. In the press-fitting, a flange portion 29-2c that is generated due to a difference between outer diameters of the large diameter portion 29-2a and the small diameter portion 29-2b is abutted with an end face 17f of the arm portion 17b. With this abutting, an outer peripheral wall portion 29-2a1 of the large diameter portion 29-2a in the mounting portion 29-2 and an outer peripheral wall portion 17b1 of the arm portion 17b become substantially flush with each other.

Further, in the press-fitting, the inner peripheral wall portion 17e2 of the arm portion 17b and the outer peripheral wall portion 29-2b1 of the small diameter portion 29-2b may be bonded and joined with an adhesive therebetween. Moreover, such a configuration may be employed that in a state where the small diameter portion 29-2b of the mounting portion 29-2 is inserted into the hollow space of the arm portion 17b, the arm portion 17b is staked so as to compress the small diameter portion 29-2b. In addition, in a state where the small diameter portion 29-2b of the mounting portion 29-2 is inserted into the hollow space of the arm portion 17b, a portion to which the arm portion 17b and the small diameter portion 29-2b are adjacent may be welded and joined.

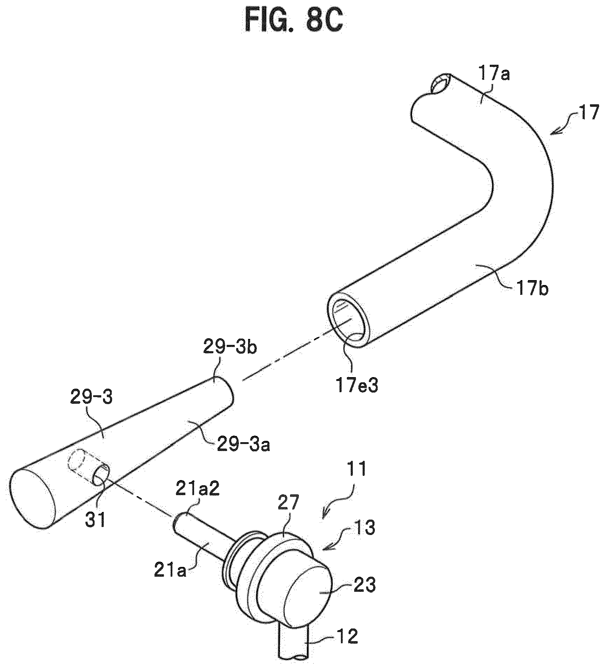

Moreover, the mounting portion 29-3 according to the third example in the fifth embodiment is formed to have a substantially columnar appearance shape, as shown in FIG. 8C, similar to the mounting portion 29-1 or 2 according to the first or second example. Further, the mounting portion 29-3 according to the third example includes a wedge-shaped outer peripheral wall portion 29-3a, as shown in FIG. 8C.

An outer diameter dimension of a tip portion 29-3b, in the mounting portion 29-3 according to the third example, that faces an inner peripheral wall portion 17e3 of the arm portion 17b in the stabilizer 17 is formed smaller than the inner diameter dimension of the arm portion 17b, as shown in FIG. 8C. The mounting portion 29-3 according to the third example is joined to the arm portion 17b in the stabilizer 17 in such a manner that the wedge-shaped outer peripheral wall portion 29-3a of the mounting portion 29-3 is press-fitted into the inner peripheral wall portion 17e3 of the arm portion 17b.

Further, in the press-fitting, the inner peripheral wall portion 17e3 of the arm portion 17b and the wedge-shaped outer peripheral wall portion 29-3a of the mounting portion 29-3 may be bonded and joined with an adhesive therebetween. Moreover, such a configuration may be employed that in a state where the wedge-shaped outer peripheral wall portion 29-3a of the mounting portion 29-3 is inserted into the hollow space of the arm portion 17b, the arm portion 17b is staked so as to compress the mounting portion 29-3. In addition, in a state where the wedge-shaped outer peripheral wall portion 29-3a of the mounting portion 29-3 is inserted into the hollow space of the arm portion 17b, a portion to which the arm portion 17b and the mounting portion 29-3 are adjacent may be welded and joined.

In the stabilizer manufacturing method, and the joint structure for a stabilizer link according to the fifth embodiment, as shown in each of FIG. 8A to FIG. 8C, the stud portion 21a of the ball stud 21 is press-fitted into the penetration-hole 31 of each of the mounting portions 29-1 to 3 that is joined to the arm portion 17b in the stabilizer 17 (the stabilizer manufacturing method, and the joint structure for a stabilizer link according to the first embodiment are cited), thereby joining the stabilizer link 11 to the stabilizer 17.

In the stabilizer manufacturing method, and the joint structure for a stabilizer link according to the fifth embodiment, in a state where the stud portion 21a of the ball stud 21 is caused to penetrate through the penetration-hole 31 of each of the mounting portions 29-1 to 3 that is joined to the arm portion 17b in the stabilizer 17, the penetration-side end portion 21a2 of the stud portion 21a is staked (the stabilizer manufacturing method, and the joint structure for a stabilizer link according to the second embodiment are cited), whereby the stabilizer link 11 may be joined to the stabilizer 17.

In the stabilizer manufacturing method, and the joint structure for a stabilizer link according to the fifth embodiment, in a state where the stud portion 21a of the ball stud 21 is caused to penetrate through the penetration-hole 31 of each of the mounting portions 29-1 to 3 that is joined to the arm portion 17b in the stabilizer 17, the penetration-side end portion 21a2 (see FIG. 5A) of the stud portion 21a is welded to the mounting portion 17c (the stabilizer manufacturing method, and the joint structure for a stabilizer link according to the third embodiment are cited), whereby the stabilizer link 11 may be joined to the stabilizer 17.

In the stabilizer manufacturing method, and the joint structure for a stabilizer link according to the fifth embodiment, in a state where the stud portion 21a of the ball stud 21 is caused to penetrate through the penetration-hole 31 of each of the mounting portions 29-1 to 3 that is joined to the arm portion 17b in the stabilizer 17, the outer peripheral wall of the stud portion 21a is bonded to an inner peripheral wall of the penetration-hole 31 using an adhesive (which is not shown) (the stabilizer manufacturing method, and the joint structure for a stabilizer link according to the third embodiment are cited), whereby the stabilizer link 11 may be joined to the stabilizer 17.

With the stabilizer manufacturing method, and the joint with structure for a stabilizer link according to each of the first to third examples in the fifth embodiment, it is possible to easily embody a rigid joint of the stabilizer link 11 with respect to the stabilizer 17 that does not particularly require a measure against separation of the joint by using each of the mounting portions 29-1 to 3 that is separately provided from the arm portion 17b of the stabilizer 17 and the stud portion 21a of the ball stud 21 as an intermediate joining member, when the stabilizer link 11 is joined with respect to the hollow and tubular stabilizer 17.

Moreover, the mounting portions 29 are joined both ends of the hollow and tubular stabilizer 17 so as to block the hollow space, so that it is also possible to obtain a secondary effect of preventing a liquid such as water from intruding into the hollow space of the stabilizer 17 and preventing rust or the like from generating.

### <Stabilizer Manufacturing Method, and Joint Structures for Stabilizer Link According to First to Third Examples in Sixth Embodiment>

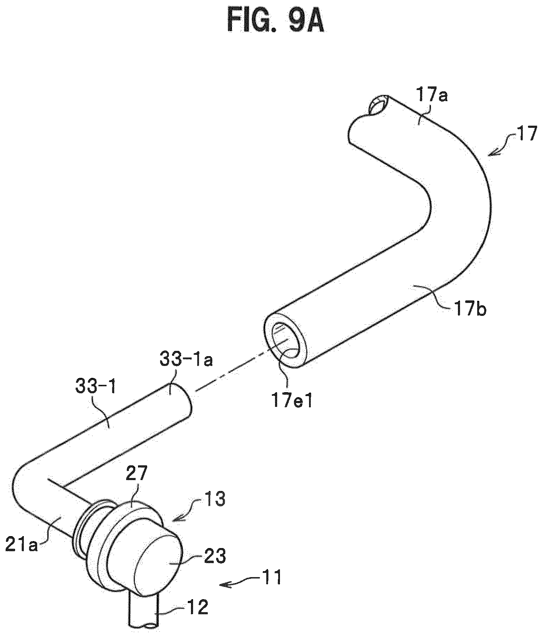

Stabilizer manufacturing methods, and joint structures for a stabilizer link according to first to third examples in a sixth embodiment will be described with reference to FIG. 9A to FIG. 9C. FIG. 9A to FIG. 9C are perspective views respectively showing the stabilizer manufacturing methods, and the joint structures for a stabilizer link according to the first to third examples in the sixth embodiment.

The stabilizer manufacturing method, and the joint structure for a stabilizer link according to each of the first to third examples in the fifth embodiment are used when the stabilizer link 11 is joined with respect to the hollow and tubular stabilizer 17 via each of the mounting portions 29-1 to 3 (see FIG. 8A to FIG. 8C) that is separately provided from the arm portion 17b of the stabilizer 17 and the stud portion 21a of the ball stud 21.

In contrast, the stabilizer manufacturing methods, and the joint structures for a stabilizer link according to the first to third examples in the sixth embodiment are different from the stabilizer manufacturing methods, and the joint structures for a stabilizer link according to the first to third examples in the fifth embodiment in that as shown in each of FIG. 9A to FIG. 9C, the stabilizer link 11 is joined with respect to the hollow and tubular stabilizer 17 via each of mounting portions 33-1 to 3 (see FIG. 9A to FIG. 9C) that is separately provided from the arm portion 17b of the stabilizer 17 but is integrally provided with the stud portion 21a of the ball stud 21.

In view of the difference, in the stabilizer manufacturing methods, and the joint structures for a stabilizer link according to the first to third examples in the sixth embodiment, as shown in each of FIG. 9A to FIG. 9C, each of the substantially columnar mounting portions 33-1 to 3 that extends in a substantially L-shape is integrally provided with respect to the stud portion 21a of the ball stud 21. A raw material for the mounting portions 33-1 to 3 is not particularly limited, and for example, metal such as iron or resin (including fiber-reinforced plastics and carbon fiber-reinforced plastics) may be employed as appropriate.

An outer diameter dimension of the mounting portion 33-1 according to the first example in the sixth embodiment is formed substantially the same as or slightly smaller than the inner diameter dimension of the arm portion 17b in the stabilizer 17, as shown in FIG. 9A. The mounting portion 33-1 according to the first example is joined with respect to the arm portion 17b in the stabilizer 17 in such a manner that an outer peripheral wall portion 33-1a of the mounting portion 33-1 is press-fitted into the inner peripheral wall portion 17e1 of the arm portion 17b.

Further, in the press-fitting, the inner peripheral wall portion 17e1 of the arm portion 17b and the outer peripheral wall portion 33-1a of the mounting portion 33-1 may be bonded and joined with an adhesive therebetween. Moreover, such a configuration may be employed that in a state where the mounting portion 33-1 is inserted into the hollow space of the arm portion 17b, the arm portion 17b is staked so as to compress the mounting portion 33-1. In addition, in a state where the mounting portion 33-1 is inserted into the hollow space of the arm portion 17b, a portion to which the arm portion 17b and the mounting portion 33-1 are adjacent may be welded and joined.

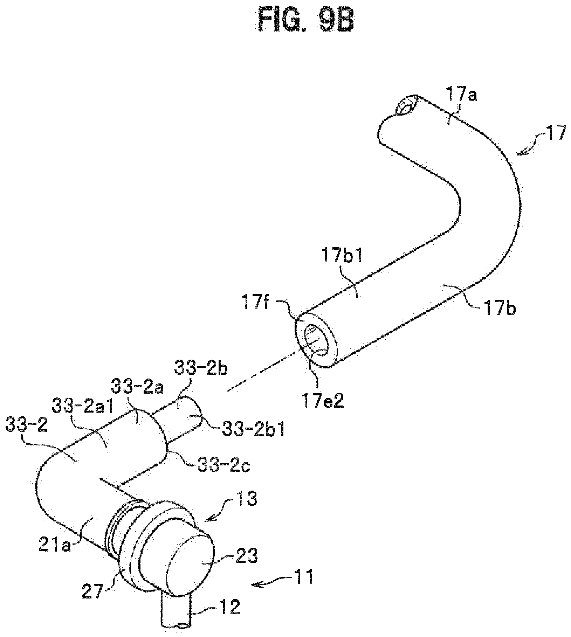

Moreover, the mounting portion 33-2 according to the second example in the sixth embodiment is formed to have a substantially columnar appearance shape, as shown in FIG. 9B, similar to the mounting portion 33-1 according to the first example. Further, the mounting portion 33-2 according to the second example has a substantially columnar large diameter portion 33-2a and a substantially columnar small diameter portion 33-2b, which are coaxially continuous to each other, as shown in FIG. 9B.

An outer diameter dimension of the small diameter portion 33-2b in the mounting portion 33-2 according to the second example is formed substantially the same as or slightly smaller than the inner diameter dimension of the arm portion 17b in the stabilizer 17, as shown in FIG. 9B. The mounting portion 33-2 according to the second example is joined to the arm portion 17b in the stabilizer 17 in such a manner that an outer peripheral wall portion 33-2b1 of the small diameter portion 33-2b in the mounting portion 33-2 is press-fitted into the inner peripheral wall portion 17e2 of the arm portion 17b. In the press-fitting, a flange portion 33-2c that is generated due to a difference between outer diameters of the large diameter portion 33-2a and the small diameter portion 33-2b is abutted with the end face 17f of the arm portion 17b. With this abutting, an outer peripheral wall portion 33-2a1 of the large diameter portion 33-2a and an outer peripheral wall 17b1 of the arm portion 17b in the mounting portion 33-2 become substantially flush with each other.

Further, in the press-fitting, the inner peripheral wall portion 17e2 of the arm portion 17b and the outer peripheral wall portion 33-2b1 of the small diameter portion 33-2b may be bonded and joined with an adhesive therebetween. Moreover, such a configuration may be employed that in a state where the small diameter portion 33-2b of the mounting portion 33-2 is inserted into the hollow space of the arm portion 17b, the arm portion 17b is staked so as to compress the small diameter portion 33-2b. In addition, in a state where the small diameter portion 33-2b of the mounting portion 33-2 is inserted into the hollow space of the arm portion 17b, a portion to which the arm portion 17b and the small diameter portion 33-2b are adjacent may be welded and joined.

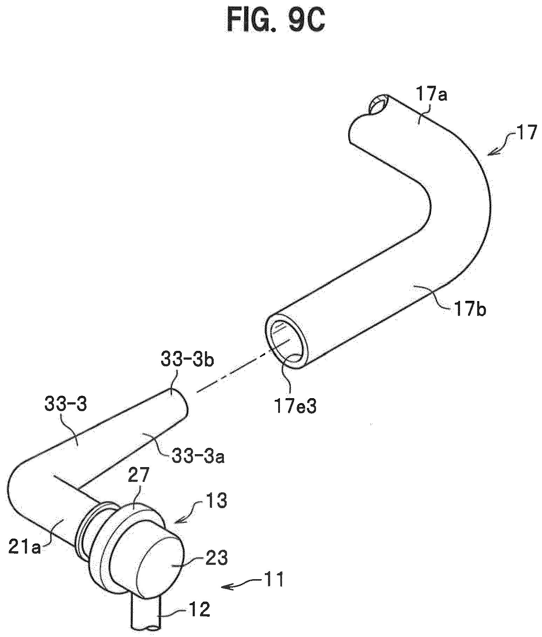

Moreover, the mounting portion 33-3 according to the third example in the sixth embodiment is formed to have a substantially columnar appearance shape, as shown in FIG. 9C, similar to the mounting portion 33-1 or 2 according to the first or second example. Further, the mounting portion 33-3 according to the third example includes a wedge-shaped outer peripheral wall portion 33-3a, as shown in FIG. 9C.

An outer diameter dimension of a tip portion 33-3b, in the mounting portion 33-3 according to the third example, that faces the inner peripheral wall portion 17e3 of the arm portion 17b in the stabilizer 17 is formed smaller than the inner diameter dimension of the arm portion 17b, as shown in FIG. 9C. The mounting portion 33-3 according to the third example is joined to the arm portion 17b in the stabilizer 17 in such a manner that the wedge-shaped outer peripheral wall portion 33-3a of the mounting portion 33-3 is press-fitted into the inner peripheral wall portion 17e3 of the arm portion 17b.

Further, in the press-fitting, the inner peripheral wall portion 17e3 of the arm portion 17b and the wedge-shaped outer peripheral wall portion 33-3a of the mounting portion 33-3 may be bonded and joined with an adhesive therebetween. Moreover, such a configuration may be employed that in a state where the wedge-shaped outer peripheral wall portion 33-3a of the mounting portion 33-3 is inserted into the hollow space of the arm portion 17b, the arm portion 17b is staked so as to compress the mounting portion 33-3. In addition, in a state where the wedge-shaped outer peripheral wall portion 33-3a of the mounting portion 33-3 is inserted into the hollow space of the arm portion 17b, a portion to which the arm portion 17b and the mounting portion 33-3 are adjacent may be welded and joined.

With the stabilizer manufacturing method, and the joint with structure for a stabilizer link according to each of the first to third examples in the sixth embodiment, it is possible to easily embody a rigid joint of the stabilizer link 11 with respect to the stabilizer 17 that does not particularly require a measure against separation of the joint by using each of the mounting portions 33-1 to 3 that is provided separated from the arm portion 17b of the stabilizer 17 but is integrally provided with the stud portion 21a of the ball stud 21 as an intermediate joining member, when the stabilizer link 11 is joined with respect to the hollow and tubular stabilizer 17.

Moreover, each of the mounting portions 33-1 to 3 is joined at both ends of the hollow and tubular stabilizer 17 so as to block the hollow space, so that it is also possible to obtain a secondary effect of preventing a case in which a liquid such as water is intruded into the hollow space of the stabilizer 17 and preventing rust or the like from generating.

### <Joint Structure for Stabilizer Link According to Seventh Embodiment of Present Invention>

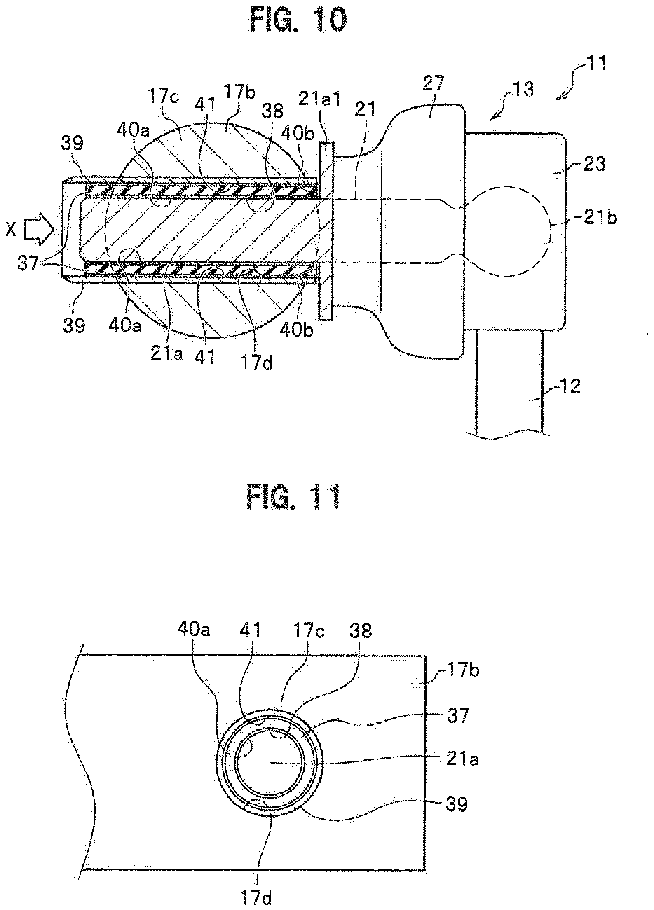

A joint structure for a stabilizer link according to a seventh embodiment will be described with reference to FIG. 10 and FIG. 11. FIG. 10 is a main part cross-sectional view showing the joint structure for a stabilizer link according to the seventh embodiment of the present invention. FIG. 11 is a front view showing the joint structure for a stabilizer link according to the seventh embodiment of the present invention, viewed from a direction of an arrow X shown in FIG. 10.

In the joint structure for a stabilizer link according to the seventh embodiment of the present invention, the penetration-hole 17d is opened in the mounting portion 17c that is integrally provided with the arm portion 17b of the stabilizer 17, as shown in FIG. 10 and FIG. 11. The penetration-hole 17d is formed so as to be oriented to a direction orthogonal to a longitudinal direction of the mounting portion 17c. A tubular member 39 made of metal is press-fitted into and joined to the penetration-hole 17d (later described in detail).

An outer diameter dimension of the tubular member 39 is formed substantially the same as or slightly smaller than the inner diameter dimension of the penetration-hole 17d. The stud portion 21a of the ball stud 21 is elastically joined to the penetration-hole 17d of the mounting portion 17c with an elastic member 37 having a cylindrical shape being interposed between the tubular member 39 that is inserted through the penetration-hole 17d of the mounting portion 17c and the stud portion 21a of the ball stud 21.

As shown in FIG. 10 and FIG. 11, a penetration-hole 38 through which the stud portion 21a of the ball stud 21 is to be inserted is opened in the elastic member 37 so as to penetrate through the axial center part of the cylindrical shape. An inner diameter dimension of the penetration-hole 38 is formed substantially the same as or slightly larger than the outer diameter dimension of the stud portion 21a.

As shown in FIG. 10 and FIG. 11, the stud portion 21a of the ball stud 21 is joined to an inner side wall of the penetration-hole 38 that is opened in the elastic member 37. This joint is implemented by the inner side wall of the penetration-hole 38 being vulcanization-bonded to the stud portion 21a of the ball stud 21. This vulcanization-bonding is performed in a state where an adhesive layer 40a (see FIG. 10) having an appropriate thickness is interposed therebetween.

It should be noted that as shown in FIG. 10, such a configuration may be employed that an end face of the elastic member 37 on a side opposed to the flange portion 21a1 having a disk shape that is provided to the stud portion 21a is vulcanization-bonded to the flange portion 21al, thereby reinforcing the joint. This vulcanization-bond is also performed in a state where an adhesive layer 40b (see FIG. 10) having an appropriate thickness is interposed therebetween.

Moreover, the tubular member 39 is joined to an outer side wall of the elastic member 37, as shown in FIG. 10 and FIG. 11. This joint is implemented by the outer side wall of the elastic member 37 being vulcanization-bond to an inner side wall of the tubular member 39. This vulcanization-bonding is performed in a state where an adhesive layer 41 (see FIG. 10) having an appropriate thickness is interposed therebetween.

The elastic member 37 is formed from, which is not particularly limited, for example, rubber elastic resin including natural rubber, epoxidized natural rubber, isoprene rubber, butadiene rubber, butadiene-isoprene rubber, styrene-butadiene rubber, chloroprene rubber, acrylonitrile-butadiene rubber (NBR), hydrogenation nitrile rubber, chlorinated polyethylene rubber, butyl rubber, acrylic rubber, ethylene-vinyl acetate-acrylic ester copolymerization rubber, silicone rubber, and styrene-butadiene rubber.

The thickness dimension of the elastic member 37 may be set to an appropriate dimension through an experiment and a simulation by considering the frequency and the like of the vibration the transmission of which between the stabilizer link 11 and the stabilizer 17 is intended to be prevented.

The tubular member 39 is joined to the mounting portion 17c that is integrally provided with the arm portion 17b in the stabilizer 17 in such a manner that an outer side wall of the tubular member 39 is press-fitted into an inner side wall of the penetration-hole 17d that is opened in the mounting portion 17c.

Further, in the press-fitting, the inner side wall of the penetration-hole 17d and the outer side wall of the tubular member 39 may be bonded and joined with an adhesive therebetween. Moreover, such a configuration may be employed that in a state where the tubular member 39 is caused to penetrate through the penetration-hole 17d of the mounting portion 17c, a penetration-side end portion of the tubular member 39 is staked, thereby elastically joining the stabilizer link 11 to the stabilizer 17. In addition, such a configuration may be employed that in a state where the tubular member 39 is caused to penetrate through the penetration-hole 17d of the mounting portion 17c, the penetration-side end portion of the tubular member 39 is welded to the mounting portion 17c, thereby elastically joining the stabilizer link 11 to the stabilizer 17.

In the joint structure for a stabilizer link according to the seventh embodiment of the present invention, the stud portion 21a of the ball stud 21 is elastically joined to the tubular member 39 that is joined to the penetration-hole 17d with the elastic member 37 being interposed between the penetration-hole 17d of the mounting portion 17c and the stud portion 21a of the ball stud 21.

With the joint structure for a stabilizer link according to the seventh embodiment of the present invention, it is possible to excellently hold a comfortable ride of the vehicle by suppressing vibration and noise.

### [Functional Effects Exhibited by Stabilizer Manufacturing Methods, And Joint Structures For Stabilizer Link According to Plurality of Embodiments of Present Invention]

Next, functional effects exhibited by the stabilizer manufacturing methods, and the joint structures for a stabilizer link according to the plurality of embodiments of the present invention will be described.

In the stabilizer manufacturing method according to the present invention (1), the stud portion 21a of the ball stud 21 is press-fitted into the penetration-hole 17d of the mounting portion 17c, thereby joining the stabilizer link 11 to the stabilizer 17.

With the stabilizer manufacturing method according to the present invention (1), it is possible to embody a rigid joint of the stabilizer link 11 with respect to the stabilizer 17 that does not particularly require a measure against separation of the joint by a frictional force generated between the outer wall surface of the stud portion 21a and the inner wall surface of the penetration-hole 17d.

In the stabilizer manufacturing method according to the present invention (2), the stud portion 21a of the ball stud 21 is press-fitted into the penetration-hole 17d of the mounting portion 17c, and in a state where the stud portion 21a of the ball stud 21 is caused to penetrate through the penetration-hole 17d of the mounting portion 17c, the penetration-side end portion 21a2 of the stud portion 21a is staked, thereby joining the stabilizer link 11 to the stabilizer 17.

With the stabilizer manufacturing method according to the present invention (2), it is possible to embody a more rigid joint, compared with the stabilizer manufacturing method according to the present invention (1).

In the stabilizer manufacturing method according to the present invention (3), the stud portion 21a of the ball stud 21 is press-fitted into the penetration-hole 17d of the mounting portion 17c, and in a state where the stud portion 21a of the ball stud 21 is caused to penetrate through the penetration-hole 17d of the mounting portion 17c, the outer peripheral wall of the stud portion 21a is bonded to the inner peripheral wall of the penetration-hole 17d using the adhesive 26, thereby joining the stabilizer link 11 to the stabilizer 17.

With the stabilizer manufacturing method according to the present invention (3), it is possible to embody a more rigid joint, compared with the stabilizer manufacturing method according to the present invention (1).

In the stabilizer manufacturing method according to the present invention (4), the stud portion 21a of the ball stud 21 is press-fitted into the penetration-hole 17d of the mounting portion 17c, and in a state where the stud portion 21a of the ball stud 21 is caused to penetrate through the penetration-hole 17d of the mounting portion 17c, the penetration-side end portion 21a2 of the stud portion 21a is welded to the mounting portion 17c, thereby joining the stabilizer link 11 to the stabilizer 17.

With the stabilizer manufacturing method according to the present invention (4), it is possible to embody a more rigid joint, compared with the stabilizer manufacturing method according to the present invention (1).

In the stabilizer manufacturing method according to the present invention (5), in a state where the stud portion 21a of the ball stud 21 is caused to penetrate through the penetration-hole 17d of the mounting portion 17c, the penetration-side end portion 21a2 of the stud portion 21a is staked, thereby joining the stabilizer link 11 to the stabilizer 17.

With the stabilizer manufacturing method according to the present invention (5), it is possible to embody a rigid joint of the stabilizer link 11 with respect to the stabilizer 17 that does not particularly require a measure against separation of the joint by the locking force with respect to the mounting portion 17c that acts in the axial direction of the stud portion 21a with the cooperation of the staked portions 22-1 to 3 (see FIG. 3B) of the stud portion 21a and the flange portion 21a1.

In the stabilizer manufacturing method according to the present invention (6), in a state where the stud portion 21a of the ball stud 21 is caused to penetrate through the penetration-hole 17d of the mounting portion 17c, the penetration-side end portion 21a2 of the stud portion 21a is welded to the mounting portion 17c, thereby joining the stabilizer link 11 to the stabilizer 17.

With the stabilizer manufacturing method according to the present invention (6), it is possible to embody a rigid joint of the stabilizer link 11 with respect to the stabilizer 17 that does not particularly require a measure against separation of the joint by the locking force with respect to the mounting portion 17c that acts in the axial direction of the stud portion 21a with the cooperation of the welded portions 24-1 to 3 (see FIG. 5A) and the flange portion 21a1 of the stud portion 21a.

In the stabilizer manufacturing method according to the present invention (7), in a state where the stud portion 21a of the ball stud 21 is inserted through (including caused to penetrate through) the penetration-hole 17d of the mounting portion 17c, the outer peripheral wall of the stud portion 21a is bonded to the inner peripheral wall of the penetration-hole 17d using the adhesive 26, thereby joining the stabilizer link 11 to the stabilizer 17.

With the stabilizer manufacturing method according to the present invention (7), the outer peripheral wall of the stud portion 21a is bonded to the inner peripheral wall of the penetration-hole 17d using the adhesive 26, thereby joining the stabilizer link 11 to the stabilizer 17, so that it is possible to easily embody a rigid joint of the stabilizer link 11 with respect to the stabilizer 17 that does not particularly require a measure against separation of the joint.

In the stabilizer manufacturing method according to the present invention (8), the outer peripheral wall of the stud portion 21a is bonded to the inner peripheral wall of the penetration-hole 17d using the adhesive 26, and in a state where the stud portion 21a of the ball stud 21 is caused to penetrate through the penetration-hole 17d of the mounting portion 17c, the penetration-side end portion 21a2 of the stud portion 21a is staked, thereby joining the stabilizer link 11 to the stabilizer 17.

With the stabilizer manufacturing method according to the present invention (8), it is possible to embody a more rigid joint, compared with the stabilizer manufacturing method according to the present invention (7).

In the stabilizer manufacturing method according to the present invention (9), the outer peripheral wall of the stud portion 21a is bonded to the inner peripheral wall of the penetration-hole 17d using the adhesive 26, and in a state where the stud portion 21a of the ball stud 21 is caused to penetrate through the penetration-hole 17d of the mounting portion 17c, the penetration-side end portion 21a2 of the stud portion 21a is welded to the mounting portion 17c, thereby joining the stabilizer link 11 to the stabilizer 17.

With the stabilizer manufacturing method according to the present invention (9), it is possible to embody a more rigid joint, compared with the stabilizer manufacturing method according to the present invention (7).

In the stabilizer manufacturing method according to the present invention (10), the receiving grooves 21a3, 21a4 for the adhesive 26 (see FIG. 7A, FIG. 7B) are provided in the applied surface for the adhesive 26 that comes into contact with the penetration-hole 17d, in the stud portion 21a.

With the stabilizer manufacturing method according to the present invention (10), the receiving grooves 21a3, 21a4 for the adhesive 26 are provided in the applied surface for the adhesive 26 that comes into contact with the penetration-hole 17d, in the stud portion 21a, in the meaning of making the amount in the applied surface for the adhesive 26 uniform, it is possible to embody a more rigid joint, compared with the stabilizer manufacturing method according to the present invention (7).

In the stabilizer manufacturing method according to the present invention (11), the mounting portions 29, 33 (see FIG. 8, FIG. 9) are members that are separately provided from the stabilizer 17, are joined to both ends of the stabilizer 17.

With the stabilizer manufacturing method according to the present invention (11), when the stabilizer link 11 is joined with respect to the hollow and tubular stabilizer 17, it is possible to easily embody a rigid joint of the stabilizer link 11 with respect to the stabilizer 17 that does not particularly require a measure against separation of the joint.

In the joint structure for a stabilizer link according to the present invention (12), the stud portion 21a of the ball stud 21 is press-fitted into the penetration-hole 17d of the mounting portion 17c accordingly to be joined to the mounting portion 17c.

With the joint structure for a stabilizer link according to the present invention (12), it is possible to embody a rigid joint of the stabilizer link 11 with respect to the stabilizer 17 that does not particularly require a measure against separation of the joint by a frictional force generated between the outer wall surface of the stud portion 21a and the inner wall surface of the penetration-hole 17d.

In the joint structure for a stabilizer link according to the present invention (13), the stud portion 21a of the ball stud 21 is joined to the mounting portion 17c in such a manner that the penetration-side end portion 21a2 of the stud portion 21a being caused to penetrate through the penetration-hole 17d of the mounting portion 17c is staked.

With the joint structure for a stabilizer link according to the present invention (13), it is possible to embody a rigid joint of the stabilizer link 11 with respect to the stabilizer 17 that does not particularly require a measure against separation of the joint by the locking force with respect to the mounting portion 17c that acts in the axial direction of the stud portion 21a with the cooperation of the staked portions 22-1 to 3 (see FIG. 3B) of the stud portion 21a and the flange portion 21a1.

In the joint structure for a stabilizer link according to the present invention (14), the stud portion 21a of the ball stud 21 is joined to the mounting portion 17c in such a manner that the penetration-side end portion 21a2 of the stud portion 21a being caused to penetrate through the penetration-hole 17d of the mounting portion 17c is welded to the mounting portion 17c.

With the joint structure for a stabilizer link according to the present invention (14), it is possible to embody a rigid joint of the stabilizer link 11 with respect to the stabilizer 17 that does not particularly require a measure against separation of the joint by the locking force with respect to the mounting portion 17c that acts in the axial direction of the stud portion 21a with the cooperation of the welded portions 24-1 to 3 (see FIG. 5A) and the flange portion 21a1 of the stud portion 21a.

In the joint structure for a stabilizer link according to the present invention (15), the stud portion 21a of the ball stud 21 is joined to the mounting portion 17c in such a manner that the stud portion 21a being inserted through (including caused to penetrate through) the penetration-hole 17d of the mounting portion 17c is bonded to the penetration-hole 17d using the adhesive.

With the joint structure for a stabilizer link according to the present invention (15), the outer peripheral wall of the stud portion 21a is bonded to the inner peripheral wall of the penetration-hole 17d using the adhesive 26, thereby joining the stud portion 21a to the mounting portion 17c, so that it is possible to easily embody a rigid joint of the stabilizer link 11 with respect to the stabilizer 17 that does not particularly require a measure against separation of the joint.

In the joint structure for a stabilizer link according to the present invention (16), the stud portion 21a of the ball stud 21 is elastically joined to the tubular member 39 (in other words, the mounting portion 17c) that is joined to the penetration-hole 17d with the elastic member 37 being interposed between the penetration-hole 17d of the mounting portion 17c and the stud portion 21a of the ball stud 21.

With the joint structure for a stabilizer link according to the present invention (16), it is possible to excellently hold a comfortable ride of the vehicle by suppressing vibration and noise.

### [Other embodiments]

The plurality of embodiments described above indicate examples of embodying the present invention. Accordingly, the technical scope of the present invention should not be limitedly interpreted with these. This is because the present invention can be embodied in various forms without departing from the gist or main characteristics thereof.

For example, in the joint structure for a stabilizer link according to the seventh embodiment of the present invention, although an example in which the tubular member 39 is inserted through the penetration-hole 17d of the mounting portion 17c has been described, the present invention is not limited to this example. The tubular member 39 may be omitted. In short, as long as the substantially cylindrical elastic member 37 is provided so as to be interposed between the stud portion 21a of the ball stud 21 and the penetration-hole 17d of the mounting portion 17c, any configuration may be employed.

### Reference Signs List

- 11: stabilizer link
- 12: support bar
- 13: ball joint
- 17: stabilizer
- 17: mounting portion
- 17d: penetration-hole (through-hole)
- 21: ball stud
- 21a: stud portion
- 21b: ball portion
- 23: housing
- 26: adhesive
- 29-1 to 3: mounting portion
- 31: penetration-hole (through-hole)
- 33-1 to 3: mounting portion
- 37: elastic member

## Claims

1. A stabilizer manufacturing method comprising joining a stabilizer link for coupling a suspension device to a stabilizer, which are provided in a vehicle, to the stabilizer, thereby manufacturing the stabilizer to which the stabilizer link is joined, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer is formed of a rod-shaped member made of metal,
mounting portions to which the stabilizer links are to be joined are respectively provided at both ends of the stabilizer,
through-holes through which the stud portions of the ball studs are to be inserted are respectively provided in the mounting portions, and
the stabilizer link is joined to the stabilizer by press-fitting the stud portion of the ball stud into the through-hole of the mounting portion.

2. The stabilizer manufacturing method according to claim 1, wherein the stabilizer link is joined to the stabilizer by press-fitting the stud portion of the ball stud into the through-hole of the mounting portion, and in a state where the stud portion is caused to penetrate through the through-hole, staking a penetration-side end portion of the stud portion.

3. The stabilizer manufacturing method according to claim 1, wherein the stabilizer link is joined to the stabilizer by press-fitting the stud portion of the ball stud into the through-hole of the mounting portion, and in a state where the stud portion is inserted through the through-hole, bonding the stud portion to the through-hole using an adhesive.

4. The stabilizer manufacturing method according to claim 1, wherein the stabilizer link is joined to the stabilizer by press-fitting the stud portion of the ball stud into the through-hole of the mounting portion, and in a state where the stud portion is caused to penetrate through the through-hole, welding the penetration-side end portion of the stud portion to the mounting portion.

5. A stabilizer manufacturing method comprising joining a stabilizer link for coupling a suspension device to a stabilizer, which are provided in a vehicle, to the stabilizer, thereby manufacturing the stabilizer to which the stabilizer link is joined, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer includes a substantially columnar member made of metal,
mounting portions to which the stabilizer links are to be joined are respectively provided at both ends of the stabilizer,
through-holes through which the stud portions of the ball studs are to be inserted are respectively provided in the mounting portions, and
the stabilizer link is joined to the stabilizer by staking a penetration-side end portion of the stud portion in a state where the stud portion of the ball stud is caused to penetrate through the through-hole of the mounting portion.

6. A stabilizer manufacturing method comprising joining a stabilizer link for coupling a suspension device to a stabilizer, which are provided in a vehicle, to the stabilizer, thereby manufacturing the stabilizer to which the stabilizer link is joined, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer includes a substantially columnar member made of metal,
mounting portions to which the stabilizer links are to be joined are respectively provided at both ends of the stabilizer,
through-holes through which the stud portions of the ball studs are to be inserted are respectively provided in the mounting portions, and
the stabilizer link is joined to the stabilizer by welding a penetration-side end portion of the stud portion to the mounting portion in a state where the stud portion of the ball stud is caused to penetrate through the through-hole of the mounting portion.

7. A stabilizer manufacturing method comprising joining a stabilizer link for coupling a suspension device to a stabilizer, which are provided in a vehicle, to the stabilizer, thereby manufacturing the stabilizer to which the stabilizer link is joined, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer includes a substantially columnar member made of metal,
mounting portions to which the stabilizer links are to be joined are respectively provided at both ends of the stabilizer,
through-holes through which the stud portions of the ball studs are to be inserted are respectively provided in the mounting portions, and
the stabilizer link is joined to the stabilizer by bonding the stud portion to the through-hole using an adhesive in a state where the stud portion of the ball stud is inserted through the through-hole of the mounting portion.

8. The stabilizer manufacturing method according to claim 7, wherein the stabilizer link is joined to the stabilizer by bonding the stud portion to the through-hole using the adhesive, and in a state where the stud portion is caused to penetrate through the through-hole, staking a penetration-side end portion of the stud portion.

9. The stabilizer manufacturing method according to claim 7, wherein the stabilizer link is joined to the stabilizer by bonding the stud portion to the through-hole using the adhesive, and in a state where the stud portion is caused to penetrate through the through-hole, welding a penetration-side end portion of the stud portion to the mounting portion.

10. The stabilizer manufacturing method according to claim 7, wherein receiving grooves for the adhesive are provided in an applied surface for the adhesive in the stud portion that comes into contact with the through-hole.

11. The stabilizer manufacturing method according to any one of claims 1 to 10, wherein the mounting portions are members that are separately provided from the stabilizer, and are respectively joined to the both ends of the stabilizer.

12. A joint structure for a stabilizer link for joining a stabilizer link for coupling a suspension device to a stabilizer, which are provided in a vehicle, to the stabilizer, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer is formed of a rod-shaped member made of metal,
mounting portions to which the stabilizer links are to be joined are respectively provided at both ends of the stabilizer,
through-holes through which the stud portions of the ball studs are to be inserted are respectively provided in the mounting portions, and
the stud portion of the ball stud is joined to the mounting portion by being press-fitted into the through-hole of the mounting portion.

13. A joint structure for a stabilizer link for joining a stabilizer link for coupling a suspension device to a stabilizer, which are provided in a vehicle, to the stabilizer, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer is formed of a rod-shaped member made of metal,
mounting portions to which the stabilizer links are to be joined are respectively provided at both ends of the stabilizer,
through-holes through which the stud portions of the ball studs are to be inserted are respectively provided in the mounting portions, and
the stud portion of the ball stud is joined to the mounting portion by staking a penetration-side end portion of the stud portion in a state of being caused to penetrate through the through-hole of the mounting portion.

14. A joint structure for a stabilizer link for joining a stabilizer link for coupling a suspension device to a stabilizer, which are provided in a vehicle, to the stabilizer, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer is formed of a rod-shaped member made of metal,
mounting portions to which the stabilizer links are to be joined are respectively provided at both ends of the stabilizer,
through-holes through which the stud portions of the ball studs are to be inserted are respectively provided in the mounting portions, and
the stud portion of the ball stud is joined to the mounting portion by welding the penetration-side end portion of the stud portion in a state of being caused to penetrate through the through-hole of the mounting portion to the mounting portion.

15. A joint structure for a stabilizer link for joining a stabilizer link for coupling a suspension device to a stabilizer, which are provided in a vehicle, to the stabilizer, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer is formed of a rod-shaped member made of metal,
mounting portions to which the stabilizer links are to be joined are respectively provided at both ends of the stabilizer,
through-holes through which the stud portions of the ball studs are to be inserted are respectively provided in the mounting portions, and
the stud portion of the ball stud is joined to the mounting portion by bonding the stud portion in a state of being inserted through the through-hole of the mounting portion to the through-hole using an adhesive.

16. A joint structure for a stabilizer link for joining a stabilizer link for coupling a suspension device to a stabilizer, which are provided in a vehicle, to the stabilizer, wherein
the stabilizer link includes: a support bar; and ball joints that are provided at both ends of the support bar,
each of the ball joints includes: a ball stud including a ball portion and a stud portion; and a housing that turnably supports the ball portion of the ball stud,
the stabilizer is formed of a rod-shaped member made of metal,
mounting portions to which the stabilizer links are to be joined are respectively provided at both ends of the stabilizer,
through-holes through which the stud portions of the ball studs are to be inserted are respectively provided in the mounting portions, and
the stud portion of the ball stud is joined to the mounting portion with an elastic member being interposed between the through-hole of the mounting portion and the stud portion of the ball stud.
